# EUROPÄISCHE PATENTSCHRIFT

(11) **EP 2 192 272 B1**
(45) Veröffentlichungstag und Bekanntmachung des Hinweises auf die Patenterteilung: **12.01.2011**
(21) Anmeldenummer: 08170180.7
(22) Anmeldetag: 28.11.2008
(51) Int. Cl.: F01D 25/16, F01D 25/18, F02C 6/12, F02C 7/06

(54) **Vorrichtung zum Abdichten eines Lagergehäuses eines Abgasturboladers**
Device for sealing a bearing box of a turbocharger
Dispositif pour étanchéifier un boîtier de palier de turbocompresseur

(43) Veröffentlichungstag der Anmeldung: 02.06.2010
(73) Patentinhaber: ABB Turbo Systems AG, 5400 Baden (CH)
(72) Erfinder: Mundinger, Gerd, CH-5430 Wettingen (CH); Schlienger, Joel, CH-8008 Zürich (CH); Kies, Matthias, CH-5443 Niederrohrdorf (CH); Aberle, Patrick, CH-5417 Untersiggenthal (CH)
(74) Vertreter: ABB Patent Attorneys

(56) Entgegenhaltungen:
- WO-A-2008/042698
- CH-A5- 673 052
- JP-A- 7 217 441
- JP-A- 9 041 982
- US-A- 4 664 605
- US-A1- 2002 158 418

## Beschreibung

### Technisches Gebiet

Die Erfindung bezieht sich auf das Gebiet von Abgasturboladern.

Sie betrifft eine Vorrichtung zum Abdichten eines Schmieröl aufnehmenden Lagergehäuses nach dem Oberbegriff von Patentanspruch 1 sowie einen Abgasturbolader nach Anspruch 9 mit einer solchen Vorrichtung.

Bei einem Abgasturbolader werden die Abgase eines Verbrennungsmotors zur Verdichtung der dem Motor zugeführte Verbrennungsluft genutzt. Mit der so aufgeladenen, d.h. vorverdichteten, Verbrennungsluft werden die Füllmenge und somit auch das Kraftstoffgemisch in den Zylindern des Motors erhöht und daraus ein merklicher Leistungsanstieg für den Motor gewonnen. Der dabei verwendete Abgasturbolader setzt sich standardmässig aus einem Rotor mit einem Verdichterrad, einem Turbinenrad und einer Verbindungswelle, einer Lagerung, feststehenden und mit einem Massenstrom belasteten Gehäuseteilen, wie Verdichtergehäuse oder Turbinengehäuse, und einem die Lagerung aufnehmenden Lagergehäuse zusammen.

Aufgrund der meist hohen Prozessdrücke im turbinen- wie auch verdichterseitigen Strömungsbereich ist die Turboladerwelle gegenüber dem Innenplenum des Lagergehäuses mit einem passenden Dichtkonzept abzudichten. Der Innendruck im Plenum des Lagergehäuses entspricht üblicherweise dem atmosphärischen Druck von 1 bar. Hingegen hängt der Gasdruck im Strömungsbereich der Verdichterrespektive Turbinenseite vom aktuellen Betriebspunkt des Turboladers ab und liegt meist über dem Plenumsdruck des Lagergehäuses. Um einem Druckausgleich entgegenzuwirken ist der im Lagergehäuse gelagerte Abschnitt des Rotors daher über zwei Dichtungen aus dem Lagergehäuse geführt, von denen die eine das Lagergehäuse in Richtung Verdichter und die andere in Richtung Turbine abdichtet. In gewissen Fällen ist aber auch mit einem Unterdruck im Verdichter- bzw. im Turbinengehäuse zu rechnen, z.B. im Teillastbetrieb oder bei Stillstand, so dass dann gegebenenfalls Schmieröl aus dem Lagergehäuse ins Turbinen- oder Verdichtergehäuse gelangen kann. Im Verdichtergehäuse könnte eindringendes Schmieröl die aufgeladene Verdichterluft verunreinigen und nachfolgend durch Verbrennen im Motor zu unerwünschten Emissionen führen.

### Stand der Technik

In CH 673 052 A5 und in EP 0 834 645 A1 sind jeweils Abgasturbolader mit Abdichtvorrichtung der eingangs genannten Art beschrieben. Die Vorrichtungen dienen jeweils dem Abdichten eines Schmieröl aufnehmenden Lagergehäuses, aus dem ein im Gehäuseinneren gelagerter Rotor eines Abgasturboladers in ein mit einem Massenstrom belastbares Verdichtergehäuse des Laders geführt ist. Die Vorrichtungen weisen jeweils eine Zwischenwand auf, die eine von einem Lagergehäuse des Turboladers umschlossene Ölfangkammer und einen Radrückraum eines Verdichtergehäuses voneinander trennt. Ferner weisen die Vorrichtungen jeweils eine auf einer Welle eines Turboladerrotors befestigte Dichtscheibe auf und eine Fangrinne für Schmieröl, welches aus einem Lager des Rotors in die Ölfangkammer austritt. Das austretende Schmieröl wird durch die rotierende Dichtscheibe nach aussen geschleudert, trifft auf die Lagergehäusewand, läuft an der Wand entlang in die Ölfangrinne, fliesst über die Rinne nach unten in einen Ölablauf und von dort wieder zurück in den Ölkreislauf der Lagerschmierung. Eine zwischen Rotor und einer Zwischenwand angeordnete Dichtung sorgt dafür, dass unterschiedliche Drücke in den von Verdichter- und Lagergehäuse umschlossenen Räumen nicht zu unerwünschten Ausgleichsströmungen führen. Diese Dichtung kann wie in CH 673 052 A5 gezeigt als Dichtungsring ausgeführt sein und in einem Trennspalt zwischen der rotierenden Dichtungsscheibe und dem Zwischenwand angeordnet sein, kann aber auch wie in EP 0 834 645 A1 gezeigt eine Labyrinthdichtung sein, die im Radrückraum zwischen dem Verdichterrad und der Zwischenwand angeordnet ist.

Weitere Ausführungsformen von Abdichtungsvorrichtungen der eingangs genannten Art sind auch in WO 2008/042698 A1 beschrieben. Auch diese Abdichtungsvorrichtungen weisen jeweils eine in eine feststehende Zwischenwand eingeformte und in einer Ölfangkammer angeordnete Ölfangrinne auf. Aus einem Wellenlager eines Abgasturboladers über einen Axiallagerspalt in die Ölfangkammer strömendes Schmieröl wird an die Wand der Ölfangkammer geschleudert, fliesst entlang der Wand in die Rinne und über die Rinne nach unten in einen Ölablauf ab. Im unteren Teil der Rinne läuft das Öl an der rechten und an der linken Rinnenwand ab. Da der zwischen Rotor und Zwischenwand vorgesehene Trennspalt in eine dieser beiden Rinnenwände mündet, ist bei Betriebspunkten mit Unterdruck auf der Verdichterseite nicht zu vermeiden, dass der Trennspalt trotz dazwischen liegender Dichtungen besaugt wird und Öl über diese Dichtungen in den Verdichter des Turboladers und damit in die Ansaugluft eines Verbrennungsmotors gelangt.

US-A- 4,664,605 beschreibt eine weitere Abdichtungsvorrichtung, die das Eindringen von Schmieröl aus dem Wellenlager eines Abgasturboladers in den Verdichter verhindern soll. Diese Abdichtungsvorrichtung weist eine Ölfangkammer auf, die durch ein Abschirmblech 15 in zwei Teilkammern unterteilt ist. Das radial aus einem Axiallager des Turboladers austretende Schmieröl wird nach aussen geschleudert, trifft auf das Abschirmblech 15 der ersten Teilkammer, wird in einer ins Blech 15 eingeformten Rinne 45 gesammelt und über Öffnungen 57, 59 und eine Zunge 17A in einen Ölablauf 27 befördert. Das austretende Schmieröl kann auch in eine zweite Teilkammer 16 der Ölfangkammer gelangen. Das Öl wird dann entlang einer die Teilkammer 16 vom Radrückraum 1d des Verdichters trennenden Zwischenwand 10 nach unten in der Ölablauf 27 geführt. Hierbei kann es jedoch in einen Trennspalt gelangen, der zwischen einer auf dem Rotor 7 des Turboladers befestigten und daher rotierenden Dichtscheibe 14 und der feststehend gehaltenen Zwischenwand 10 angeordnet ist. Im Trennspalt befindet sich eine Dichtung 11, die den Radrückraum 1d gegenüber dem Teilraum 16 der Ölfangkammer abdichtet, die aber bei Betrieb des Turboladers durch Schmieröl, welches vom Teilraum 16 in den Trennspalt eindringt, unzulässig stark belastet werden kann.

Auch in JP 07/217441 A ist eine Vorrichtung angegeben, mit der das Eindringen von Schmieröl aus dem Wellenlager eines Abgasturboladers in den Verdichter vermieden werden soll. Auch diese Abdichtungsvorrichtung weist eine Ölfangkammer auf, die durch ein Abschirmblech in zwei Teilkammern unterteilt ist. Das radial aus einem Axiallager des Turboladers austretende Schmieröl wird nach aussen geschleudert, trifft auf das Abschirmblech 41 der ersten Teilkammer und läuft entlang dem Blech beim Teil 41 e in das Lagergehäuseplenum ab und wieder zurück in den Ölkreislauf der Lagerschmierung. Durch einen Spalt beim Teil 41d kann Öl entlang einer Schleuderscheibe 42 in die zweite Kammer 40 gelangen. Das Öl läuft entlang einer Zwischenwand 30 in eine Rinne nach unten und weiter bei einem Teil 30b in das Lagergehäuseplenum. Dabei ist die Rinne aus einem Wandansatz 30d der Zwischenwand und einem rotierenden Teil, der Flanke 42 (Fig.7), gebildet. In den unteren Sektor des Wandansatzes 30d sind zwei Abtropfkanten 30e einer Abtropfvorrichtung für das Öl eingeformt. Dazwischen liegt jedoch im oberen Sektor ein axial erstreckter, den Rotor des Turboladers von einer feststehenden Zwischenwand trennender Spalt, der sich mit Öl füllen kann. Bei Betriebspunkten mit Unterdruck auf der Verdichterseite ist es trotz des Einbaus einer Dichtung 35 in den Trennspalt nicht zu vermeiden, dass der Trennspalt besaugt wird und Öl über die Dichtung 35 in den Verdichter gelangt.

### Kurze Darstellung der Erfindung

Der Erfindung, wie sie in den Ansprüchen 1 bis 10 definiert ist, liegt die Aufgabe zugrunde, eine Vorrichtung zum Abdichten eines Schmieröl aufnehmenden Lagergehäuses, aus dem der im Gehäuseinneren gelagerte Rotor eines Abgasturboladers ins Verdichtergehäuse des Laders geführt ist, anzugeben, bei der das Ablaufverhalten von Schmieröl in einer Ölfangkammer der Abdichtvorrichtung und damit auch die Dichtigkeit der Abdichtvorrichtung des Turboladers verbessert sind. Die Erfindung betrifft auch einen in Anspruch 10 definierten Abgasturbolader mit dieser Abdichtvorrichtung.

Bei der Abdichtvorrichtung nach der Erfindung ist in einen unterhalb der Drehachse des Rotors liegenden unteren Sektor einer den Trennspalt begrenzenden Stirnfläche des Wandabsatzes eine Abtropfvorrichtung eingeformt, die eine senkrecht zur Drehachse des Rotors ausgerichtete Ablauffläche für das Schmieröl enthält, welche gegenüber dem verbleibenden Teil der Stirnfläche zum Radrückraum hin axial versetzt ist.

Die Abtropfvorrichtung enthält eine Ablauffläche für Schmieröl, die einen grossen axialen Abstand von einer den Trennspalt begrenzenden rotierenden Dichtscheibe aufweist Gegebenenfalls in den Trennspalt eindringendes Schmieröl kann nun ohne Wechselwirkung mit der Dichtscheibe in einen Ölablauf des Lagergehäuses geführt werden. Selbst bei Besaugung des Trennspalts durch Unterdruck im Radrückraum des Verdichters, wie dies etwa im Stillstands- oder Teillastbetrieb des Turboladers Fall ist, wird so das Ansaugen einer unzulässigen Ölmenge über den Trennspalt in den Verdichter wirksam unterbunden.

Weitere Vorteile der Erfindung ergeben sich aus den abhängigen Ansprüchen.

### Kurze Beschreibung der Zeichnungen

Nachfolgend ist anhand von Figuren ein Ausführungsbeispiel einer Abdichtvorrichtung nach der Erfindung dargestellt und näher erläutert In allen Figuren sind gleichwirkende Elemente mit gleichen Bezugszeichen versehen. Es zeigt:
- Fig. 1: eine Aufsicht auf einen lediglich schematisch dargestellten Abgasturbolader, dessen Gehäuse längs der Achse seines Rotors geschnitten dargestellt ist, und der eine umrandet dargestellte Abdichtvorrichtung nach der Erfindung aufweist,
- Fig.2: eine detallierte Darstellung der in Fig.1 umrandet dargestellten Abd ichtvorrichtung,
- Fig. 3: eine Aufsicht von rechts auf eine Stirnseite eines Wandansatzes einer Zwischenwand der Abdichtvorrichtung nach Fig.2, und
- Fig. 4: eine Ansicht des isometrisch dargestellten Wandansatzes nach Fig. 3 von unten rechts.

### Weg zur Ausführung der Erfindung

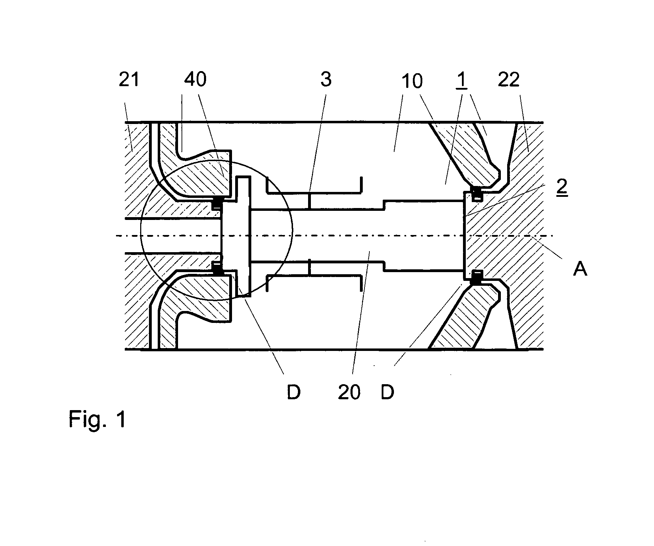

Fig. 1 zeigt schematisch eine Teilansicht eines Abgasturboladers mit einem feststehend angeordneten Gehäuse 1 und einem um eine Achse A drehbaren Rotor 2 mit einer Welle 20. Auf der linken Seite der Welle 20 ist ein Verdichterrad 21 des Abgasturboladers befestigt. Auf der rechten Seite der Welle 20 ist ein Turbinenrad 22 des Abgasturboladers angebracht. Das Turbinenrad 22 umfasst nicht dargestellte Schaufeln, über die es von einem in einem Verbrennungsmotor erzeugten Abgasstrom angetrieben wird. Das Verdichterrad umfasst ebenfalls nicht dargestellte Schaufeln.

Im Bereich zwischen den beiden Rädern sind lediglich schematisch dargestellte Axial- und Radiallager 3 angeordnet, welche die bei der Führung des Rotors 2 auftretenden axialen und radialen Kräfte aufnehmen.

Das Gehäuse 1 umschliesst den Rotor 2 und weist ein feststehendes Lagergehäuse 10 auf, welches die Axial- und Radiallager 3 und einen Abschnitt des Rotors 2 aufnimmt und gegenüber zwei verbleibenden Teilen des Gehäuses 1 abschirmt, in denen das mit dem heissen Abgas belastete Turbinenrad 22 der Abgasturbine und das zum Verdichten von Luft vorgesehene Verdichterrad 21 angeordnet sind. Die Axial- und Radiallager 3 werden so vor Abgas oder Druckluft enthaltenden Massenströmen geschützt, die jeweils hohen Druck, hohe Temperatur und hohe Geschwindigkeit aufweisen. Damit diese Massenströme nicht im Lagergehäuse 10 wirken können und umgekehrt auch kein Schmieröl aus dem Lagergehäuse 10 in den Verdichter resp. die Abgasturbine entweichen kann, sind zwei Wellenabdichtungen D vorgesehen, von denen sich die eine an einem Abschnitt des Lagergehäuses befindet, durch den der Rotor 2 in den Verdichter geführt ist, und die andere an einem Abschnitt des Lagergehäuses, durch den der Rotor 2 in die Abgasturbine geführt ist.

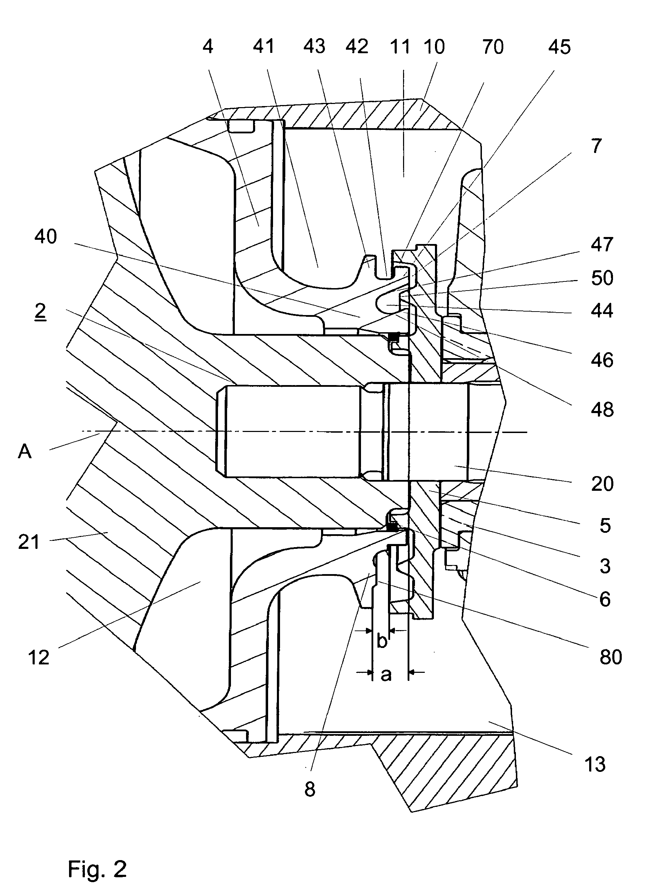

Eine Ausführungsform einer verdichterseitig angeordneten Wellendichtung D ist in den Figuren 2 bis 4 schematisch dargestellt. Sie enthält eine Zwischenwand 4, die eine vom Lagergehäuse 10 umschlossene Ölfangkammer 11 von einem Radrückraum 12 des Verdichters trennt. Die Zwischenwand 4 weist einen axial erstreckten und ringförmig um den Rotor 2 geführten Wandansatz 40 auf. Eine Dichtscheibe 5 ist auf der Welle 2 befestigt, so dass sie zwischen dem Lager 3 und dem Verdichterrad 21 steht. Zwischen der Dichtscheibe 5 und dem von Zwischenwand 4 und Verdichterrad 21 begrenzten Radrückraum 12 des Verdichters befindet sich mindestens eine Dichtung 6. Die Dichtung 6 kann einen oder mehrere Kolbenringe enthalten und ist dann im allgemeinen in einen zwischen Abtropfvorrichtung 8 and Radrückraum 12 angeordneten Abschnitt des Trennspalts 7 eingebaut. Sie kann aber auch als Labyrinthdichtung ausgeführt sein und ist dann im allgemeinen zwischen dem Verdichterrad 2 und der Zwischenwand 4 liegend in den Radrückraum 12 eingebaut. In jedem Fall dichtet sie einen Trennspalt 7 ab, der zwischen der Dichtscheibe 5 und dem ringförmig um den Rotor 2 geführten Wandansatz 40 angeordnet ist. In die radial nach aussen weisende Mantelfläche des Wandansatzes 40 sind zwei Ölfangrinnen 41 und 42 eingeformt, welche voneinander durch einen umlaufenden Steg 43 getrennt sind. Eine weitere Ölfangrinne 44 ist in eine Stirnfläche des Wandansatzes 40 eingeformt, die einen vorwiegend radial ausgerichteten Abschnitt des Trennspalts 7 begrenzt.

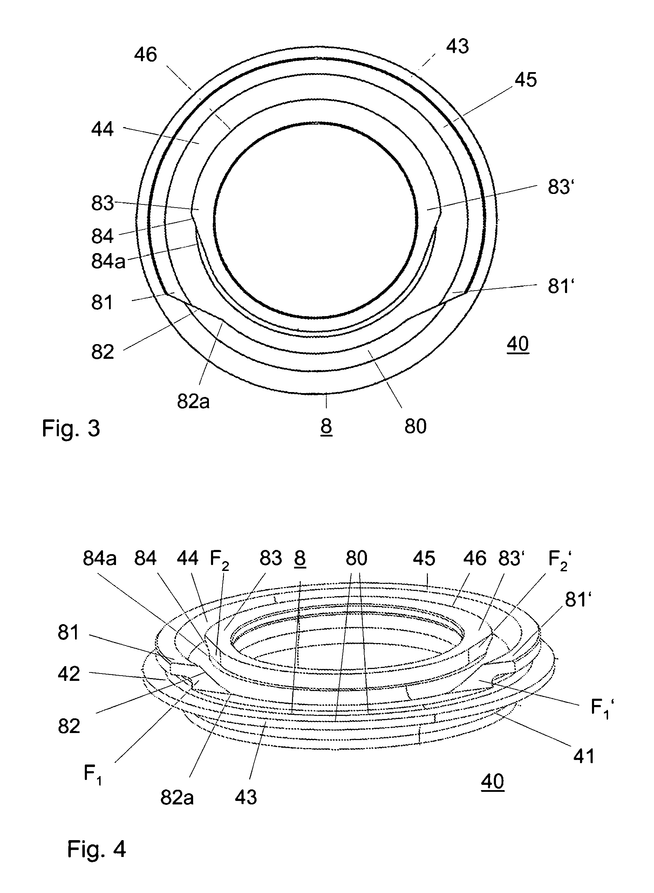

Die Ölfangrinne 42 und der Trennspalt 7 wie auch die beiden Ölfangrinnen 42 und 44 sind voneinander durch einen in den Wandansatz 40 eingeformten Wandvorsprung 45 getrennt. Der Wandvorsprung 45 ist als offener Ring ausgebildet. Dieser offene Ring kann bei der Fertigung der Abdichtvorrichtung D dadurch erreicht werden, dass der zunächst als geschlossener Ring ausgebildete Wandvorsprung 45 durch spanabhebendes Bearbeiten unterbrochen wird. Es entsteht so eine Abtropfvorrichtung 8 mit zwei aus den Figuren 3 und 4 ersichtlichen Enden 81 und 81', die in einem unterhalb der Drehachse A befindlichen, unteren Sektor einer den Trennspalt 7 begrenzenden Stirnfläche des Wandansatzes 40 angeordnet sind. In die beiden Enden 81 und 81' ist jeweils eine vom Wandvorsprung 45 auf eine Ablauffläche 80 der Abtropfvorrichtung 8 erstreckte Fläche F1 resp. F1' (Fig.4) eingeformt. Von dieser Fläche ist in Fig.3 nur eine Kante ersichtlich, die lediglich am Ende 81 mit dem Bezugszeichen 82 bezeichnet ist.

Die Ölfangrinne 44 ist mit einem als offener Ring ausgebildeten Rinnenrand 46 gegenüber dem Trennspalt 7 abgegrenzt. Sie weist ferner eine den Rinnenrand umgebende Fläche 47 auf, welche dem Ablaufen von eintretendem Schmieröl in den vom Rinnenrand begrenzten Grund 48 der Ölfangrinne 44 dient. Zwei in den unteren Sektor der Stirnfläche des Wandansatzes 40 geführte und in die Abtropfvorrichtung 8 integrierte Enden 83 und 83' des Rinnenrandes 46 weisen jeweils eine vom Rinnenrand 46 auf die Ablauffläche 80 erstreckte Fläche F2 resp. F2' (Fig.4) auf. Von dieser Fläche ist in Fig.3 eine Kante ersichtlich, die lediglich am Ende 83 mit dem Bezugszeichen 84 bezeichnet ist.

Durch die vorstehend beschriebene Ausbildung des Wandvorsprungs 45 bzw. des Rinnenrandes 46 im unteren Sektor der Stirnfläche des Wandansatzes 40 wird eine vorwiegend senkrecht zur Drehachse A ausgerichteten Ablauffläche 80 gebildet, die über die Flächen F₁, F'₁ bzw. F₂, F'₂ mit den Ölfangrinnen 42, 44 verbunden ist und gegenüber dem im oberen Sektor befindlichen Teil der Stirnfläche um einen aus Fig.2 ersichtlichen Abstand a in axialer Richtung zum Radrückraum 12 hin versetzt ist. Zugleich wird so auch ein grosser Abstand b zwischen der Ablauffläche 80 und der Dichtscheibe 5 in axialer Richtung erreicht.

Während des Betriebs des Turboladers gelangt unabhängig davon, ob das Lager 3 als Axial- oder Radiallager bzw. als Gleit- oder Wälzlager ausgebildet ist, durch einen zwischen der Dichtscheibe 5 und dem Lager 3 befindlichen Spalt Schmieröl in die Ölfangkammer 11. In einen oberhalb der Drehachse A gelegenen Teil der Ölfangkammer 11 trifft das Öl auf die Wand des Lagergehäuses 10 und läuft zum überwiegenden Teil in die Ölfangrinne 41. Hierbei schirmt der in radialer Richtung länger als der Trennspalt 7 erstreckte Steg 43 einen vorwiegend axial erstreckten Eingangsabschnitt 70 des Trennspalts 7 und im Bereich der Abtropfvorrichtung 8 die Dichtscheibe 5 wirksam gegen Ölspritzer aus axialer Richtung ab. Durch die abschirmende Wirkung der Dichtscheibe 5 kann zudem nur wenig Öl zum Trennspalt 7 gelangen. Dennoch an den Trennspalt 7 gelangendes Öl läuft zum grossen Teil über die Ölfangrinne 42 ab. Möglicherweise in den Trennspalt 7 gelangendes Öl wird von einer ringförmig um die Drehachse A geführten und in den Trennspalt 7 ragende Abspritzkante 50 der Dichtscheibe 5 in die Ölfangrinne 44 geschleudert und läuft von dort unter der Wirkung der Schwerkraft über die Abtropfvorrichtung 8 in einen Ölablauf 13 des Lagergehäuses 10. Da die Abspritzkante 50 über den Trennspalt 7 hinaus in die Ölfangrinne 44 ragt, wird das Öl besonders wirksam aus dem Trennspalt 7 entfernt und kann dann über die radial nach innen gekrümmte Fläche 47 in den vom Rinnenrand 46 begrenzten Grund 48 der Ölfangrinne 44 gelangen.

An den in die Abtropfvorrichtung 8 integrierten Enden 83 und 83' gelangt das Öl von der Rinne 44 in die Abtropfvorrichtung 8. Hierbei wird das aus der Rinne 44 tretende Öl auf der Fläche F₂ bzw. F'₂ entlang der Kante 84 zum tiefsten Punkt 84a der Kante geführt. Da dieser Punkt bereits auf der Ablauffläche 80 liegt, fliesst das Öl auf dieser Fläche weiter nach unten, um schliesslich am unteren Rand der Fläche 80 in den Ölablauf 13 abzutropfen. Hierbei ist der axiale Abstand b zwischen der Dichtscheibe 5 und der gegenüberliegende Ablauffläche 80 so gross gewählt, dass abtropfendes und/oder abfliessendes Öl der Wirkung der rotierenden Dichtscheibe 5 entzogen ist und nun nicht mehr durch die Schleuderwirkung in den oberen Teil der Ölfangkammer 11 und damit wieder in den Trennspalt 7 gelangt.

Die gleiche vorteilhafte Wirkung wird auch durch die geeignete Gestaltung des Abtropfbereichs der Rinne 42 und des Wandvorsprungs 45 erreicht. Bei der Ölfangrinne 42 fliesst an den Enden 81 und 81' des Wandvorsprungs 45 das Öl von der Rinne 42 in die Abtropfvorrichtung 8. Hierbei wird das aus der Rinne 42 tretende Öl auf der Fläche F₁ bzw. F'₁ entlang der Kante 82 zum tiefsten Punkt 82a der Kante geführt. Da auch dieser Punkt bereits auf der Ablauffläche 80 liegt, fliesst das Öl auf dieser Fläche weiter nach unten, um schliesslich am unteren Rand der Fläche 80 in den Ölablauf 13 abzutropfen.

In den Trennspalt 7 eindringendes Öl wird so effektiv in Richtung Ölablauf 13 befördert. Selbst bei Besaugung des Trennspaltes 7 durch Unterdruck im Radrückraum 12 unterbindet die geeignet ausgebildete Abdichtvorrichtung D das Ansaugen von unzulässigen Ölmengen über den Trennspalt 7 in den Verdichter wirksam.

Im Stillstandsbetrieb, d.h. bei nicht rotierender Dichtscheibe 5, und weiterlaufender Ölversorgung, ist die Abspritzkante 50 nicht wirksam. Alle anderen zuvor beschriebenen Vorteile der erfindungsgemässen Abdichtvorrichtung, wie die Wirksamkeit der Ölfangrinnen 41 und 42 und der Abschirmung des Trennspaltes 7 durch den Wandvorsprung 45, die Abschirmwirkung der Dichtscheibe 5 und das vorteilhafte Strömungs- und Abtropfverhalten der Abtropfvorrichtung 8 bleiben jedoch erhalten.

### Bezugszeichenliste

- A: Drehachse
- D: Dichtung
- F₁, F'₁, F₂, F'₂: Flächen
- a, b: Abstände
- 1: Gehäuse
- 10: Lagergehäuse
- 11: Ölfang kammer
- 12: Radrückraum
- 13: Ölablauf
- 2: Rotor
- 20: Welle
- 21: Verdichterrad
- 22: Turbinenrad
- 3: Lager
- 4: Zwischenwand
- 40: Wandansatz
- 41,42,44: Ölfangrinnen
- 43: Steg
- 45: Wandvorsprung
- 46: Rinnenrand
- 47: Fläche
- 48: Rinnengrund
- 5: Dichtscheibe
- 50: Abspritzkante
- 6: Dichtung
- 7: Trennspalt,
- 70: Eingangsabschnitt
- 8: Abtropfvorrichtung
- 80: Ablauffläche
- 81, 81': Enden von Wandvorsprung 45
- 82: Kante
- 82a: tiefster Punkt der Kante 82
- 83, 83': Enden von Rinnenrand 46
- 84: Kante
- 84a: tiefster Punkt der Kante 84

## Patentansprüche

1. Vorrichtung (D) zum Abdichten eines Schmieröl aufnehmenden Lagergehäuses (10), aus dem ein im Gehäuseinneren gelagerter Rotor (2) eines Abgasturboladers in ein mit einem Massenstrom belastbares Verdichtergehäuse des Laders geführt ist, umfassend
eine Zwischenwand (4), die eine vom Lagergehäuse umschlossene Ölfangkammer (11) und einen Radrückraum (12) des Verdichtergehäuses voneinander trennt und einen axial erstreckten und ringförmig um den Rotor (2) geführten Wandansatz (40) aufweist,
eine ringförmige Dichtscheibe (5), die auf einer Welle (20) des Rotors (2) befestigt ist und in die Ölfangkammer(11) ragt,
einen zwischen der Dichtscheibe (5) und dem Wandansatz (40) angeordneten Trennspalt (7),
eine zwischen Rotor (2) und Zwischenwand (4) angeordnete Dichtung (6), eine in eine Mantelfläche des Wandansatzes (40) eingeformte und in der Ölfangkammer angeordnete erste Ölfangrinne (42), und
eine mit der ersten Ölfangrinne (42) verbundene Abtropfvorrichtung (8), welche in der Ölfangrinne (42) gesammeltes Schmieröl mit Hilfe der Schwerkraft in einen Ölablauf (13) leitet,
**dadurch gekennzeichnet, dass** die Abtropfvorrichtung (8) in einen unterhalb der Drehachse (A) des Rotors (2) liegenden, unteren Sektor einer den Trennspalt (7) begrenzenden Stirnfläche des Wandabsatzes (40) eingeformt ist und eine senkrecht zur Drehachse des Rotors ausgerichtete Ablauffläche (80) für das Schmieröl enthält, welche gegenüber dem verbleibenden Teil der Stirnfläche zum Radrückraum (12) hin axial versetzt ist.

2. Vorrichtung nach Anspruch 1, **dadurch gekennzeichnet, dass** in den Wandansatz (40) ein nach Art eines Ringes ausgebildeter Wandvorsprung (45) eingeformt ist, der die erste Ölfangrinne (42) und den Trennspalt (7) voneinander trennt und unter Bildung der Abtropfvorrichtung (8) im unteren Sektor der Stirnfläche unterbrochen ist.

3. Vorrichtung nach Anspruch 2, **dadurch gekennzeichnet, dass** in die Stirnfläche des Wandansatzes (40) eine mit der Abtropfvorrichtung (8) verbundene zweite Ölfangrinne (44) eingeformt ist, die mit einem als offener Ring ausgebildeten Rinnenrand (46) gegenüber dem Trennspalt (7) abgegrenzt ist und eine den Rinnenrand (46) umgebende Fläche (47) aufweist, welche dem Ablaufen von eintretendem Schmieröl in den vom Rinnenrand (46) begrenzten Grund (48) der zweiten Ölfangrinne (44) dient.

4. Vorrichtung nach Anspruch 3, **dadurch gekennzeichnet, dass** die erste (42) und die zweite Ölfangrinne (44) voneinander durch den Wandvorsprung (45) getrennt sind, dass der Wandvorsprung (45) zwei in die Abtropfvorrichtung (8) integrierte Enden (81, 81') aufweist, und dass in die beiden Enden jeweils eine vom Wandvorsprung (45) auf die Ablauffläche (80) erstreckte Fläche (F₁, F'₁) eingeformt ist, welche der Führung des aus ersten Ölfangrinne (42) austretenden Schmieröls auf die Ablauffläche (80) dient.

5. Vorrichtung nach Anspruch 4, **dadurch gekennzeichnet, dass** zwei in die Abtropfvorrichtung (8) integrierte Enden (83, 83') des Rinnenrandes (46) jeweils eine vom Rinnenrand (46) auf die Ablauffläche (80) erstreckte Fläche (F₂, F'₂) aufweisen, welche der Führung des aus der zweiten Ölfangrinne (44) austretenden Schmieröls auf die Ablauffläche (80) dient.

6. Vorrichtung nach einem der Ansprüche 1 bis 5, **dadurch gekennzeichnet, dass** im oberen Sektor der Trennspalt (7) einen vorwiegend axial ausgerichteten Eintrittsabschnitt (70) aufweist, und dass in die Mantelfläche des Wandansatzes (40) eine dritte Ölfangrinne (41) eingeformt ist, die von der ersten Ölfangrinne (42) durch einen um die Drehachse (A) geführten, ringförmigen Steg (43) getrennt ist, der den Eintrittsabschnitt (70) des Trennspalts (7) und im Bereich der Abtropfvorrichtung (8) die Dichtscheibe (5) gegen Ölspritzer abschirmt.

7. Vorrichtung nach einem der Ansprüche 3 bis 6, **dadurch gekennzeichnet, dass** die Dichtscheibe (5) mindestens eine ringförmig um die Drehachse (A) geführte und in den Trennspalt (7) ragende Abspritzkante (50) aufweist.

8. Vorrichtung nach Anspruch 7, **dadurch gekennzeichnet, dass** die Abspritzkante (50) über den Trennspalt (7) hinaus in die zweite Ölfangrinne (44) ragt.

9. Vorrichtung nach einem der Ansprüche 1 bis 8, **dadurch gekennzeichnet, dass** die Dichtung (6) als Kolbenring ausgeführt ist und in einen zwischen der Abtropfvorrichtung (8) and dem Radrückraum (12) angeordneten Abschnitt des Trennspalts (7) eingebaut ist, und/oder dass die Dichtung (6) als Labyrinthdichtung ausgeführt ist und zwischen dem Verdichterrad (21) und der Zwischenwand (4) liegend in den Radrückraum (12) eingebaut ist.

10. Abgasturbolader mit einer Abdichtvorrichtung (D) nach einem der Ansprüche 1 bis 9.

## Claims

1. Device (D) for sealing off a bearing housing (10) which receives lubricating oil and out of which a rotor (2), mounted inside the housing, of an exhaust gas turbocharger is led into a compressor housing, loadable with a mass flow, of the charger, comprising
an intermediate wall (4) which separates from one another an oil-catching chamber (11) surrounded by the bearing housing and a wheel backspace (12) of the compressor housing which has an axially extended wall shoulder (40) guided annularly around the rotor (2),
an annular sealing disc (5) which is fastened on a shaft (20) of the rotor (2) and which projects into the oil-catching chamber (11),
a separating gap (7) arranged between the sealing disc (5) and the wall shoulder (40),
a seal (6) arranged between the rotor (2) and the intermediate wall (4),
a first oil-catching channel (42) formed into a surface area of the wall shoulder (40) and arranged in the oil-catching chamber, and
a drip device (8) which is connected to the first oil-catching channel (42) and which conducts lubricating oil collected in the oil-catching channel (42) into an oil outflow (13) with the aid of gravity,
**characterized in that** the drip device (8) is formed into a lower sector, lying below the axis of rotation (A) of the rotor (2), of an end face, delimiting the separating gap (7), of the wall shoulder (40) and contains, for the lubricating oil, a run-off surface (80) which is oriented perpendicularly to the axis of rotation of the rotor and which is offset axially towards the wheel backspace (12) with respect to the remaining part of the end face.

2. Device according to Claim 1, **characterized in that** the wall shoulder (40) has formed into it a wall projection (45) which is designed in the manner of a ring and separates the first oil-catching channel (42) and the separating gap (7) from one another and which is interrupted in the lower sector of the end face so as to form the drip device (8).

3. Device according to Claim 2, **characterized in that** a second oil-catching channel (44) connected to the drip device (8) is formed into the end face of the wall shoulder (40) and is delimited with respect to the separating gap (7) by means of a channel margin (46) designed as an open ring and has a surface (47) which surrounds the channel margin (46) and serves for the run-off of entering lubricating oil into the bottom (48), delimited by the channel margin (46), of the second oil-catching channel (44).

4. Device according to Claim 3, **characterized in that** the first (42) and the second (44) oil-catching channel are separated from one another by the wall projection (45), **in that** the wall projection (45) has two ends (81, 81') integrated into the drip device (8), and **in that** each of the two ends has formed into it a surface (F₁, F'₁) which is extended from the wall projection (45) to the run-off surface (80) and which serves for guiding the lubricating oil emerging from a first oil-catching channel (42) onto the run-off surface (80).

5. Device according to Claim 4, **characterized in that** two ends (83, 83') of the channel margin (46) which are integrated into the drip device (8) each have a surface (F₂, F'₂) which is extended from the channel margin (46) onto the run-off surface (80) and which serves for guiding the lubricating oil emerging from the second oil-catching channel (44) onto the run-off surface (80).

6. Device according to one of Claims 1 to 5, **characterized in that** the separating gap (7) has a predominantly axially oriented inlet portion (70) in the upper sector, and **in that** the surface area of the wall shoulder (40) has formed into it a third oil-catching channel (41) which is separated from the first oil-catching channel (42) by an annular web (43) which is led around the axis of rotation (A) and which shields the inlet portion (70) of the separating gap (7) and, in the region of the drip device (8), the sealing disc (5) against splashes of oil.

7. Device according to one of Claims 3 to 6, **characterized in that** the sealing disc (5) has at least one splash edge (50) led annularly around the axis of rotation (A) and projecting into the separating gap (7).

8. Device according to Claim 7, **characterized in that** the splash edge (50) projects beyond the separating gap (7) into the second oil-catching channel (44).

9. Device according to one of Claims 1 to 8, **characterized in that** the seal (6) is designed as a piston ring and is built into a portion of the separating gap (7) which is arranged between the drip device (8) and the wheel backspace (12), and/or **in that** the seal (6) is designed as a labyrinth seal and is built, lying between the compressor wheel (21) and the intermediate wall (4), into the wheel backspace (12).

10. Exhaust gas turbocharger having a sealing-off device (D) according to one of Claims 1 to 9.

## Revendications

1. Dispositif (D) pour étanchéifier un boîtier de palier (10) recevant de l'huile de lubrification, hors duquel un rotor (2) d'une turbosoufflante à gaz d'échappement monté à l'intérieur du boîtier est guidé dans un boîtier du compresseur pouvant être sollicité avec un débit massique, comprenant
une paroi intermédiaire (4) qui sépare l'une de l'autre une chambre de captage d'huile (11) entourée par le boîtier de palier et un espace de pression de roue (12) du boîtier de compresseur et qui présente une partie de paroi (40) s'étendant axialement et guidée de manière annulaire autour du rotor (2),
un disque d'étanchéité annulaire (5), qui est fixé sur un arbre (20) du rotor (2) et qui pénètre dans la chambre de captage d'huile (11),
une fente de séparation (7) disposée entre le disque d'étanchéité (5) et la partie de paroi (40),
un joint d'étanchéité (6) disposé entre le rotor (2) et la paroi intermédiaire (4),
une première rigole de captage d'huile (42) façonnée dans une surface d'enveloppe de la partie de paroi (40) et disposée dans la chambre de captage d'huile, et
un dispositif d'égouttage (8) connecté à la première rigole de captage d'huile (42), qui conduit l'huile de lubrification recueillie dans la rigole de captage d'huile (42) dans une évacuation d'huile (13) au moyen de la force de pesanteur,
**caractérisé en ce que** le dispositif d'égouttage (8) est formé dans un secteur inférieur d'une surface frontale de la partie de paroi (40) limitant la fente de séparation (7), lequel secteur est situé en-dessous de l'axe de rotation (A) du rotor (2), et contient une surface d'écoulement (80) pour l'huile de lubrification, orientée perpendiculairement à l'axe de rotation du rotor, laquelle est décalée axialement par rapport à la partie restante de la surface frontale en direction de l'espace de pression de roue (12).

2. Dispositif selon la revendication 1, **caractérisé en ce qu'**une saillie de paroi (45) réalisée sous forme de bague est façonnée dans la partie de paroi (40), sépare la première rigole de captage d'huile (42) et la fente de séparation (7) et est interrompue dans le secteur inférieur de la surface frontale en formant le dispositif d'égouttage (8).

3. Dispositif selon la revendication 2, **caractérisé en ce qu'**une deuxième rigole de captage d'huile (44) connectée au dispositif d'égouttage (8) est façonnée dans la surface frontale de la partie de paroi (40), et limitée par rapport à la fente de séparation (7) avec un bord de rigole (46) réalisé sous forme de bague ouverte et présente une surface (47) entourant le bord de rigole (46), laquelle sert à l'écoulement de l'huile de lubrification qui entre dans la base (48) de la deuxième rigole de captage d'huile (44) limitée par le bord de rigole (46).

4. Dispositif selon la revendication 3, **caractérisé en ce que** la première (42) et la deuxième (44) rigoles de captage d'huile sont séparées l'une de l'autre par la saillie de paroi (45), **en ce que** la saillie de paroi (45) présente deux extrémités (81, 81') intégrées dans le dispositif d'égouttage (8) et **en ce que**, dans les deux extrémités, est façonnée une surface (F₁, F'₁), s'étendant à chaque fois depuis la saillie de paroi (45) sur la surface d'écoulement (80), et qui sert à guider l'huile de lubrification sortant de la première rigole de captage d'huile (42) sur la surface d'écoulement (80).

5. Dispositif selon la revendication 4, **caractérisé en ce que** deux extrémités (83, 83') du bord de rigole (46) intégrées dans le dispositif d'égouttage (8) présentent à chaque fois une surface (F₂, F'₂) s'étendant du bord de rigole (46) sur la surface d'écoulement (80), qui sert à guider l'huile de lubrification sortant de la deuxième rigole de captage d'huile (44) sur la surface d'écoulement (80).

6. Dispositif selon l'une quelconque des revendications 1 à 5, **caractérisé en ce que**, dans le secteur supérieur, la fente de séparation (7) présente une portion d'entrée (70) orientée essentiellement axialement, et **en ce qu'**une troisième rigole de captage d'huile (41) est façonnée dans la surface d'enveloppe de la partie de paroi (40), et est séparée de la première rigole de captage d'huile (42) par une nervure annulaire (43) guidée autour de l'axe de rotation (A), qui protège la portion d'entrée (70) de la fente de séparation (7), et, dans la région du dispositif d'égouttage (8), le disque d'étanchéité (5) contre les projections d'huile.

7. Dispositif selon l'une quelconque des revendications 3 à 6, **caractérisé en ce que** le disque d'étanchéité (5) présente au moins une arête de pulvérisation (50) guidée de manière annulaire autour de l'axe de rotation (A) et pénétrant dans la fente de séparation (7).

8. Dispositif selon la revendication 7, **caractérisé en ce que** l'arête de pulvérisation (50) pénètre au-delà de la fente de séparation (7) dans la deuxième rigole de captage d'huile (44).

9. Dispositif selon l'une quelconque des revendications 1 à 8, **caractérisé en ce que** le joint d'étanchéité (6) est réalisé sous forme de bague de piston et est incorporé dans une portion de la fente de séparation (7) disposée entre le dispositif d'égouttage (8) et l'espace de pression de roue (12), et/ou **en ce que** le joint d'étanchéité (6) est réalisé sous forme de joint à labyrinthe et est incorporé entre la roue de compresseur (21) et la paroi intermédiaire (4) dans l'espace de pression de roue (12).

10. Turbosoufflante à gaz d'échappement comprenant un dispositif d'étanchéité (D) selon l'une quelconque des revendications 1 à 9.
